# EUROPÄISCHE PATENTSCHRIFT

(11) **EP 4 112 973 B1**
(45) Veröffentlichungstag und Bekanntmachung des Hinweises auf die Patenterteilung: **08.10.2025**
(21) Anmeldenummer: 22181129.2
(22) Anmeldetag: 27.06.2022
(51) Int. Cl.: F16H 3/72, B60K 17/08, B60K 1/02

(54) **ANTRIEBSANORDNUNG EINER MIT EINER VARIABEL EINSTELLBAREN DREHZAHL ANZUTREIBENDEN ARBEITSMASCHINE UND VERFAHREN ZUM BETREIBEN DER ANTRIEBSANORDNUNG**
DRIVE ARRANGEMENT FOR A WORKING MACHINE TO BE DRIVEN AT VARIABLE SPEED AND METHOD FOR OPERATING THE DRIVE ARRANGEMENT
DISPOSITIF D'ENTRAÎNEMENT D'UNE MACHINE DE TRAVAIL À RÉGLAGE VARIABLE ET À ENTRAÎNEMENT DE VITESSE DE ROTATION ET PROCÉDÉ PERMETTANT DE FAIRE FONCTIONNER LE DISPOSITIF D'ENTRAÎNEMENT

(30) Priorität: 28.06.2021 DE 102021206701
(43) Veröffentlichungstag der Anmeldung: 04.01.2023
(73) Patentinhaber: RENK GmbH, 86159 Augsburg (DE)
(72) Erfinder: Boiger, Peter, 86199 Augsburg (DE); Heider, Michael, 86507 Oberottmarshausen (DE)
(74) Vertreter: Schlotter, Alexander Carolus Paul

(56) Entgegenhaltungen:
- WO-A1-2016/172742
- DE-A1- 102012 219 125
- DE-A1- 102015 212 736

## Beschreibung

Die Erfindung betrifft eine Antriebsanordnung einer Arbeitsmaschine zum Antreiben der Arbeitsmaschine mit variabel einstellbarer Drehzahl. Des Weiteren betrifft die Erfindung ein Verfahren zum Betreiben der Antriebsanordnung.

Aus der Praxis sind Anwendungen bekannt, in welchen eine Arbeitsmaschine, wie zum Beispiel ein Verdichter oder eine Pumpe, mit einer variabel einstellbaren Drehzahl betrieben werden müssen. Hierfür werden nach der Praxis entweder als Antriebsaggregate Elektromotoren mit Frequenzumrichter eingesetzt, oder es kommt ein Getriebe mit einem hydraulisch oder elektrisch angetriebenen Überlagerungszweig zum Einsatz, mit welchem eine im benötigten Bereich variable Übersetzung bereitgestellt werden kann. Beide aus der Praxis bekannten Möglichkeiten zum Antreiben einer Arbeitsmaschine mit variabel einstellbarer Drehzahl sind aufwendig und teuer, wegen der für die Antriebsaufgabe benötigten hohen Leistungen sind Mittelspannung-Frequenzumrichter notwendig.

DE 10 2015 006 084 A1 offenbart eine Antriebsanordnung einer Arbeitsmaschine zum Antreiben der Arbeitsmaschine mit einer variabel einstellbaren Drehzahl, wobei die Antriebsanordnung neben der Arbeitsmaschine ein Differentialgetriebe und zwei Antriebsaggregate umfasst. Ein erstes Antriebsaggregat ist an ein erstes Element des Differentialgetriebes gekoppelt. Die Arbeitsmaschine ist an ein zweites Element des Differentialgetriebes gekoppelt. An ein drittes Element des Differentialgetriebes ist ein zweites Antriebsaggregat gekoppelt, dessen Drehzahl eine von der Drehzahl des ersten Antriebsaggregats abhängigen Drehzahl überlagerbar ist. Das erste Antriebsaggregat oder das zweite Antriebsaggregat sind mit einer variabel einstellbaren Drehzahl antreibbar. Diese Antriebsanordnung erlaubt es mit einfachen und kostengünstigen Mitteln eine Arbeitmaschine mit variabel einstellbarer Drehzahl anzutreiben.

WO 2016/172742 A1 betrifft einen Triebstrang mit einer Antriebswelle, einer Arbeitsmaschine, mit einer Antriebsmaschine und einem Differenzialsystem mit einem Umlaufrädergetriebe mit drei An- bzw. Abtrieben, wobei ein Abtrieb mit der Antriebswelle, ein erster Antrieb mit der Antriebsmaschine und ein zweiter Antrieb mit dem Differenzialgetriebe verbindbar ist, wobei der Antrieb geleichzeitig mit dem anderen Antrieb oder mit dem Abtrieb verbindbar ist.

Es besteht Bedarf daran, eine Antriebsanordnung einer mit einer variabel einstellbaren Drehzahl anzutreibenden Arbeitsmaschine zu schaffen, vorzugsweise eine Antriebsanordnung, bei welcher die Antriebsanordnung einfach und sicher auf eine Nenndrehzahl hochgefahren werden kann. Vorzugsweise soll vermieden werden, dass beim Verbinden eines nicht-drehzahlregelbaren Antriebsaggregats mit dem Stromnetz ein zu hoher Einschaltstrom verursacht wird, der entweder zu Netzstörungen oder zur Überhitzung beim Hochlauf führen kann.

Hiervon ausgehend liegt der vorliegenden Erfindung die Aufgabe zugrunde, eine neuartiges Antriebsanordnung und ein Verfahren zum Betreiben der Antriebsanordnung schaffen. Diese Aufgabe wird durch eine Antriebsanordnung einer mit einer variabel einstellbaren Drehzahl anzutreibenden Arbeitsmaschine nach Anspruch 1 gelöst. Das Verfahren zum Betreiben der Antriebsanordnung ist in Anspruch 17 definiert.

Erfindungsgemäß weist die Antriebsanordnung ein Differentialgetriebe, ein an einem ersten Element des Differentialgetriebes gekoppeltes ersten Antriebsaggregat, eine an ein zweites Element des Differentialgetriebes gekoppelte Arbeitsmaschine, und ein an ein drittes Element des Differentialgetriebes gekoppeltes zweites Antriebsaggregat auf, dessen Drehzahl einer von der Drehzahl des ersten Antriebsaggregat abhängigen Drehzahl überlagerbar ist. Das erste Antriebsaggregat oder das zweite Antriebsaggregat sind mit variabel einstellbarer Drehzahl antreibbar.

Erfindungsgemäß weist die Antriebsanordnung ferner eine Hilfs-Getriebestufe und ein mit der Hilfs-Getriebestufe zusammenwirkendes Schaltelement auf, wobei bei geschlossenem Schaltelement die Hilfs-Getriebestufe lastübertragend ist und die Drehzahlen von erstem Antriebsaggregat und zweitem Antriebsaggregat abhängig von zumindest einer Übersetzung der Hilfs-Getriebestufe gekoppelt sind, und wobei bei geöffnetem Schaltelement die Hilfs-Getriebestufe lastfrei ist und die Drehzahlen von erstem Antriebsaggregat und zweitem Antriebsaggregat entkoppelt. Über die Hilfs-Getriebestufe kann die Antriebsanordnung vorteilhafterweise einfach und zuverlässig unter Nutzung der Drehzahl-Variabilität des zweiten Antriebsaggregates auf Nenndrehzahl hochgefahren werden.

Vorzugsweise ist das Schaltelement ein selbststätig schaltendes, nämlich selbststätig schließendes und selbsttätig öffnendes, Schaltelement wie ein Freilauf oder eine Synchronkupplung. So kann dann, wenn das erste Antriebsaggregat beim Hochfahren auf Nenndrehzahl gebracht wird, und dann, wenn die Drehzahl des zweiten Antriebsaggregats eine sicherheitsrelevante Überdrehzahl erreicht, das Schaltelement selbsttätig schließen und einen sicherheitskritischen Ausfall der Antriebsanordnung vermeiden. Ist die Drehzahl des ersten Antriebsaggregats größer als die Drehzahl des zweiten Antriebsaggregats, so öffnet das Schaltelement selbsttätig. Wird bei Ausfall einer Kontrolleinrichtung des zweiten Antriebsaggregates dessen Drehzahl unter Berücksichtigung der Übersetzung des Hilfs-Getriebestufe höher als die des ersten Antriebsaggregats, so schließt das Schaltelement selbsttätig. Durch Verwendung eines selbststätig schaltenden Schaltelements kann auf eine Steuerungseinheit verzichtet werden und ein sicherheitskritischer Schutz durch Nutzung mechanischer Komponenten einfach und zuverlässig gewährleistet werden.

Alternativ kann das Schaltelement auch ein aktiv schaltendes Schaltelement wie eine Lamellenkupplung sein.

Die Hilfs-Getriebestufe kann als Hilfs-Planetenradsatz ausgebildet sein. Die ist konstruktiv einfach und bevorzugt.

Das Schaltelement koppelt in einer Ausführung in geschlossenem Zustand entweder das zweite Antriebsaggregat drehfest mit einem Element der Hilfs-Getriebestufe oder ein anderes Element des Hilfs-Getriebestufe drehfest an das erste Element oder das zweite Element des Differentialgetriebes.

Wenn das Schaltelement geschlossen ist, sind kann das Differentialgetriebe nicht mehr als solches betrieben werden, das Differentialgetriebe hat dann eine feste Übersetzung.

Erfindungsgemäß koppelt das Schaltelement in geschlossenem Zustand das zweite Antriebsaggregat drehfest mit einem Element der Hilfs-Getriebestufe, wobei ein anderes Element der Hilfs-Getriebestufe zusammen mit dem ersten Antriebsaggregat permanent drehfest an das erste Element des Differentialgetriebes gekoppelt ist.

Erfindungsgemäß ist alternativ vorgesehen, dass das zweite Antriebsaggregat permanent drehfest mit einem Element der Hilfs-Getriebestufe koppelt ist, wobei das Schaltelement in geschlossenem Zustand ein anderes Element der Hilfs-Getriebestufe drehfest an das erste Element des Differentialgetriebes koppelt.

Diese beiden vorteilhaften Ausführungsformen der Erfindung sind besonders bevorzugt. Bei geschlossenem Schaltelement ist die Drehzahl des mithilfe des zweiten Antriebsaggregats auf Nenndrehzahl hochzufahrenden ersten Antriebsaggregats neben der Drehzahl des zweiten Antriebsaggregats ausschließlich von der Übersetzung der HilfsGetriebestufe abhängig.

Die Übersetzung der Hilfs-Getriebestufe ist dabei vorzugsweise so gewählt, dass bei Maximaldrehzahl des zweiten Antriebsaggregats das erste Antriebsaggregat seine Nenndrehzahl erreicht.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein Blockschaltbild einer ersten Antriebsanordnung, welche nicht Teil der Erfindung ist;
- Fig. 2:: ein Blockschaltbild einer zweiten Antriebsanordnung, welche nicht Teil der Erfindung ist;
- Fig. 3:: ein Blockschaltbild einer dritten erfindungsgemäßen Antriebsanordnung.

Die Erfindung betrifft eine Antriebsanordnung einer mit einer variabel einstellbaren Drehzahl anzutreibenden Arbeitsmaschine, wobei es sich bei der Arbeitsmaschine zum Beispiel um einen Verdichter oder eine Pumpe handeln kann.

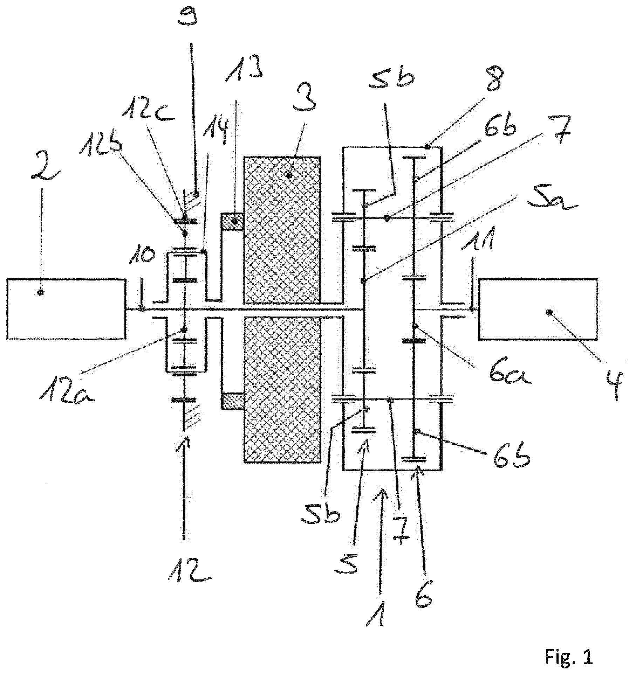

Fig. 1 zeigt ein erstes bevorzugtes Ausführungsbeispiel einer solchen Antriebsanordnung, welche nicht Teil der Erfindung ist, mit einem Differentialgetriebe 1, einem ersten Antriebsaggregat 2, einem zweiten Antriebsaggregat 3 und einer Arbeitsmaschine 4. Das erste Antriebsaggregat 2 wird auch als Hauptantriebsaggregat und das zweite Antriebsaggregat 3 auch als Überlagerungsantriebsaggregat bezeichnet. Bei diesen Antriebsaggregaten 2, 3 handelt es sich jeweils vorzugsweise um elektrische Maschinen. Das Differentialgetriebe 1 verfügt im gezeigten, bevorzugten Ausführungsbeispiel über einen ersten Planetenradsatz 5 mit einem Sonnenrad 5a und mindestens zwei Planetenrädern 5b, wobei die Planetenräder 5b in das Sonnenrad 5a des ersten Planetenradsatzes 5 kämmen. Das Differentialgetriebe 1 verfügt weiterhin über einen zweiten Planetenradsatz 6 mit einem Sonnenrad 6a und mindestens zwei Planetenrädern 6b, wobei die Planetenräder 6b in das Sonnenrad 6a kämmen. Jeweils zwei Planetenräder 5b, 6b der beiden Planetenradsätze 5, 6 sind an einer jeweiligen gemeinsamen Planetenwelle 7 angeordnet, sodass demnach jede der Planetenwellen 7 mit einem Planetenrad 5b des ersten Planetenradsatzes 5 und einem Planetenrad 6b des zweiten Planetenradsatzes 6 drehfest gekoppelt ist. Bei dem Differentialgetriebe 1 der Fig. 1 sind die Planetenwellen 7 in einem Planetenträger 8 drehbar gelagert, wobei der Planetenträger 8 in einem im Detail nicht gezeigten, drehfesten Gehäuse 9 drehbar gelagert ist, vorzugsweise über nicht gezeigte Gleitlager.

Bei der ersten Antriebsanordnung ist das erste Antriebsaggregat 2, welches als Hauptmotor bezeichnet wird, an ein erstes Element des Differentialgetriebes 1 gekoppelt, und zwar derart, dass das erste Antriebsaggregat 2 über eine Welle 10 permanent, direkt und drehfest mit dem ersten Element des Differentialgetriebes 1 gekoppelt ist, wobei es sich im Ausführungsbeispiel der Fig. 1 bei diesem ersten Element des Differentialgetriebes 1, an welches das erste Antriebsaggregat 2 gekoppelt ist, um das Sonnenrad 5a des ersten Planetenradsatzes 5 handelt.

Es sei darauf hingewiesen, dass der erste Planetenradsatz 5 anstelle des Sonnenrads 5a auch ein Hohlrad aufweisen kann, wobei dann das erste Antriebsaggregat 2 über die Welle 10 an das Hohlrad des ersten Planetenradsatzes 5 gekoppelt ist, welches dann radial außen in die Planetenräder 5b kämmt.

Die Arbeitsmaschine 4 ist an ein zweites Element des Differentialgetriebes 1 gekoppelt, und zwar gemäß Fig. 1 derart, dass die Arbeitsmaschine 4 über eine Welle 11 permanent, direkt und drehfest an das Sonnenrad 6a des zweiten Planetenradsatzes 6 gekoppelt ist.

Das zweite Antriebsaggregat 3 greift an einem dritten Element des Differentialgetriebes 1 an, wobei es sich bei diesem dritten Element des Differentialgetriebes 1, an welchem das zweite Antriebsaggregat 3 angreift, im gezeigten Ausführungsbeispiel um den Planetenträger 8 des Differentialgetriebes 1 handelt. Der Antrieb des Planetenträgers 8 erfolgt demnach über das zweite Antriebsaggregat 3, dessen Drehzahl bzw. Antriebsleistung der Drehzahl bzw. Antriebsleistung des ersten Antriebsaggregats 2 überlagert wird. Dabei wird das erste Antriebsaggregat 2 vorzugsweise mit fester bzw. konstanter Drehzahl antrieben, wohingegen das zweite Antriebsaggregat 3 vorzugsweise mit variabler Drehzahl angetrieben wird. So kann dann, wenn das erste Antriebsaggregat 2 mit der konstanten Drehzahl läuft, ausgehend von dem zweiten Antriebsaggregat 3 der von der Drehzahl des ersten Antriebsaggregats 2 abhängigen Drehzahl eine Drehzahl stufenlos überlagert werden, um an der Arbeitsmaschine 4 eine variable Drehzahl einzustellen.

Die Antriebsanordnung verfügt zusätzlich zum Differentialgetriebe 1, den beiden Antriebsaggregaten 2, 3 und der Arbeitsmaschine 4 über eine Hilfs-Getriebestufe 12 sowie über ein mit der Hilfs-Getriebestufe 12 zusammenwirkendes Schaltelement 13. Dann, wenn das Schaltelement 13 geschlossen ist, ist die Hilfs-Getriebestufe 12 lastübertragend und die Drehzahlen von erstem Antriebsaggregat 2 und zweitem Antriebsaggregat 3 sind gekoppelt, und zwar abhängig von der Übersetzung der Hilfs-Getriebestufe 12.

Dann, wenn das Schaltelement 13 geschlossen ist, stehen die Drehzahlen der beiden Antriebsaggregate 2 und 3 in einem festen Verhältnis. Auch die Arbeitsmaschine 4 nimmt dann eine Drehzahl an, die noch von der Drehzahl der Antriebsaggregate 2, 3 abhängt. Wird nur das zweite Antriebsaggregat 3 mit elektrischem Strom versorgt, so ist die Drehzahl des zweiten Antriebsaggregats 3 maßgebend für alle anderen Drehzahlen der Antriebsanordnung - das zweite Antriebsaggregat 3 treibt dann die Antriebsanordnung alleine an.

Ist hingegen das Schaltelement 13 geöffnet, so ist die Hilfs-Getriebestufe 12 lastfrei und die Drehzahlen von erstem Antriebsaggregat 2 und zweitem Antriebsaggregat 3 sind entkoppelt. Das zweite Antriebsaggregat 3 stellt dann nur den Überlagerungsanteil von Leistung und Drehzahl bereit.

Im geschlossenen Zustand wirkt das Schaltelement 13 demnach im Sinne einer Sperre für das Differentialgetriebe 1, um einen Freiheitsgrad des Differentialgetriebes 1 zu sperren. Dies wird insbesondere für das Hochfahren der Antriebsanordnung, ausgehend von einem stillstehenden, ersten Antriebsaggregat 2 genutzt, um so das erste Antriebsaggregat 2 ausgehend vom zweiten Antriebsaggregat 3 auf seine Nenndrehzahl zu bringen.

Bei einem solchen Hochfahren des ersten Antriebsaggregats 2, ausgehend vom zweiten Antriebsaggregat 3 bei geschlossenem Schaltelement 13 ist das erste Antriebsaggregat 2 stromlos, erst nach Erreichen der Nenndrehzahl des ersten Antriebsaggregats 2 wird dann zunächst das erste Antriebsaggregat 2 bestromt und dann anschließend das Schaltelement 13 geöffnet.

Die Hilfs-Getriebestufe 12 verfügt über ein Sonnenrad 12a, Planetenräder 12b und ein Hohlrad 12c. Die Planetenräder 12b sind auf einem Planetenträger 14 drehbar gelagert.

In Fig. 1 greift ein Element der Hilfs-Getriebestufe 12, nämlich das Sonnenrad 12a, zusammen mit dem ersten Antriebsaggregat 2 permanent, direkt und drehfest an der Welle 10 und so am ersten Element des Differentialgetriebes 1, in Fig. 1 am Sonnenrad 5a des ersten Planetenradsatzes 5 des Differentialgetriebes 1, an.

Dann, wenn das Schaltelement 13 geschlossen ist, koppelt dasselbe in Fig. 1 das zweite Antriebsaggregat 3 drehfest an ein zweites Element der Hilfs-Getriebestufe 12, und zwar in Fig. 1 an den Planetenträger 14.

Im Ausführungsbeispiel der Fig. 1 treibt demnach das erste Antriebsaggregat 2 über das Sonnenrad 5a und die Planetenwellen 7 das Sonnenrad 6a und über das Sonnenrad 6a die Arbeitsmaschine 4 an. Über den drehbar gelagerten Planetenträger 8 des Differentialgetriebes 1 kann im regulären Betrieb ausgehend von dem zweiten Antriebsaggregat 3 der von der Drehzahl des ersten Antriebsaggregats 2 abhängigen Drehzahl an der Welle 11 eine Drehzahl überlagert werden, um an der Arbeitsmaschine 4 eine variable Drehzahl einzustellen.

Im regulären Betrieb, nämlich dann, wenn das erste Antriebsaggregat 2 mit seiner Nenndrehzahl betrieben wird, ist das Schaltelement 13 geöffnet. Um jedoch die Antriebsanordnung hochzufahren, insbesondere ausgehend von einem Zustand, in welchem das erste Antriebsaggregat 2 stillsteht, wird das Schaltelement 13 geschlossen und das zweite Antriebsaggregat 3 über das Schaltelement 13 an die Hilfs-Getriebestufe 12 und an die Welle 10 gekoppelt bzw. drehfest angebunden. Hiermit wird ein Freiheitsgrad des Differentialgetriebes 1 gesperrt und das Hochfahren der Antriebsanordnung bis zur Nenndrehzahl des beim Hochfahren stromlosen ersten Antriebsaggregats 2 durch das zweite Antriebsaggregat 3 ermöglicht. Die Übersetzung der Hilfs-Getriebestufe 12 ist so gewählt, dass bei Maximaldrehzahl des zweiten Antriebsaggregats 3 das erste Antriebsaggregat 2 seine Nenndrehzahl erreicht.

Bei dem Schaltelement 13 kann es sich um ein reibschlüssiges Schaltelement in Form einer Reibkupplung, wie zum Beispiel einer Lamellenkupplung oder auch um ein formschlüssiges Schaltelement in Form einer Klauenkupplung handeln. Dann, wenn das Schaltelement 13 als Reibkupplung ausgebildet ist, kann diese die Funktion einer Bremse für das zweite Antriebsaggregat 3 übernehmen, wenn dieses im Betrieb ausfallen sollte.

Besonders bevorzugt ist eine Ausführung, in welcher das Schaltelement 13 als selbsttätig schließendes und selbsttätig öffnendes Schaltelement 13, insbesondere als Freilauf oder Synchronkupplung, ausgeführt ist, bei welchem Drehmoment ausschließlich in einer Drehrichtung übertragbar ist. Hierdurch kann erreicht werden, dass das Schaltelement 13 beim Hochfahren der Antriebsanordnung selbsttätig schließt, ebenso bei einem sicherheitskritischen Ausfall des zweiten Antriebsaggregats 3 im Betrieb. Ist die Drehzahl des ersten Antriebsaggregats 2 größer als die Drehzahl des zweiten Antriebsaggregats 3, so öffnet das Schaltelement 13 selbsttätig und der reguläre Überlagerungsbetrieb kann beginnen.

Sobald die Drehzahl des ersten Antriebsaggregats 2 seine Nenndrehzahl erreicht, welches angeschleppt durch das zweite Antriebsaggregat 3 beim Anschalten ohne Spannungsspitze bereits auf seiner Nenndrehzahl läuft, kann das Schaltelement 13 geöffnet werden.

Das erfolgt bei einer vorzugsweise verwendeten selbstschaltenden Ausführung des Schaltelements 13 dadurch, dass die Drehzahl des zweiten Antriebsaggregates 3 - unter Berücksichtigung der Übersetzung der vorzugsweise als Hilfs-Planetenradsatz ausgebildeten Hilfs-Gertriebstufe12 - gegenüber der des ersten Antriebsaggregates 2 gesenkt wird, bei einer Schaltkupplung durch Öffnen der Kupplung. Die selbstschaltende Ausführung des Schaltelements 13 als Synchronkupplung oder Freilauf ist jedoch bevorzugt.

Das Schaltelement 13 bleibt im gesamten Normalbetrieb, also dann, wenn das erste Antriebsaggregat 2 mit Nenndrehzahl läuft, geöffnet. Bei Verwendung eines selbstschaltenden Schaltelements 13 ist keine sicherheitsrelevante Steuereinheit erforderlich. Sicherheitskritische Funktionen können durch mechanische Komponenten bereitgestellt werden, nämlich durch das selbsttätig schließende Schaltelement 13. Für die Verblockung des Differentialgetriebes 1 ist kein Aktuator erforderlich. Die Verblockung des Differentialgetriebes 1 erfolgt selbsttätig. Auch für das Entblocken des Differentialgetriebes 1 ist kein Aktuator erforderlich. Dann, wenn die Drehzahl des ersten Antriebsaggregats 2 größer als die Drehzahl des zweiten Antriebsaggregats 3, ist das Schaltelement 13 selbsttätig geöffnet. Der Hilfs-Planetensatz 12 dreht immer mit der Drehzahl des ersten Antriebsaggregates 2.

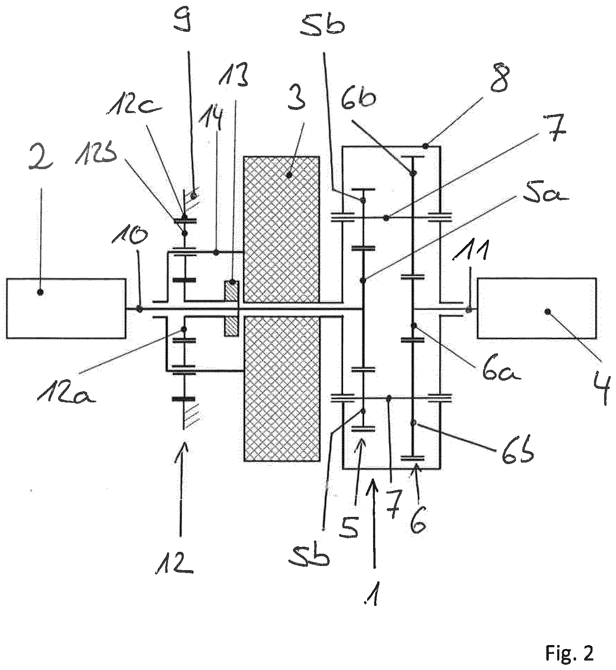

Fig. 2 zeigt eine Abwandlung der Antriebsanordnung, welche nicht Teil der Erfindung ist, bei welcher das zweite Antriebsaggregat 3 permanent und drehfest an ein Element der Hilfs-Getriebestufe 12 gekoppelt ist, nämlich an den Planetenträger 14. Über das Schaltelement 13 kann in Fig. 2 das Sonnenrad 12a des Planetenradsatzes 12 drehfest an das erste Element des Differentialgetriebes 1, nämlich in Fig. 2 an das Sonnenrad 5a des ersten Planetenradsatzes 5 des Differentialgetriebes 1, gekoppelt werden. In Fig. 2 ist demnach das Schaltelement 13 zwischen das Sonnenrad 12a und die Welle 10 geschaltet. Der Hilfs-Planetensatz 12 dreht immer mit der Drehzahl des zweiten Antriebsaggregates 3.

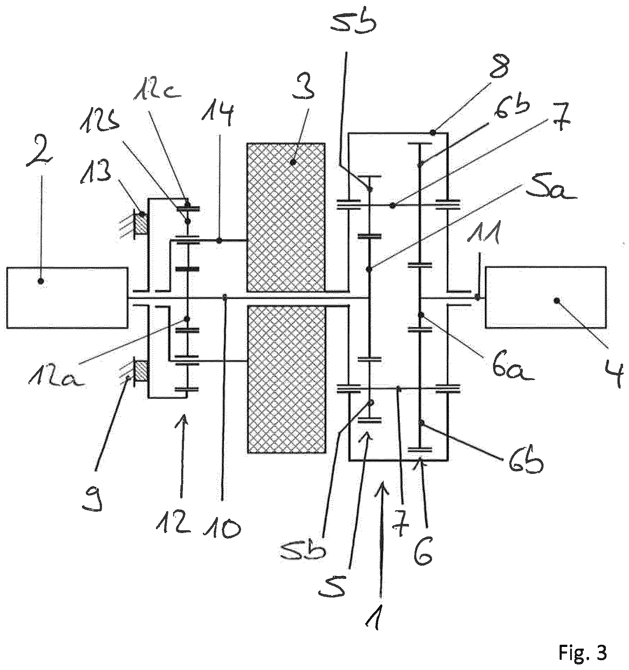

Ein Ausführungsbeispiel einer erfindungsgemäßen Antriebsanordnung zeigt Fig. 3. Während in Fig. 1 und 2 das Hohlrad 12c der Hilfs-Getriebestufe 12 jeweils permanent gehäusefest an das Gehäuse 9 angebunden ist, ist in Fig. 3 vorgesehen, dass das Schaltelement 13 zwischen das Gehäuse 9 und das Hohlrad 12c der Hilfs-Getriebestufe 12 geschaltet ist. In Fig. 3 ist das Sonnenrad 12a der Hilfs-Getriebestufe 12 permanent drehfest an die Welle 10 und die elektrische Maschine 3 permanent drehfest an den Planetenträger 14 der Hilfs-Getriebestufe 12 gekoppelt. Die Drehzahlen der Komponenten des Hilfs-Planetensatzes 12 nehmen Drehzahlen an, die von denen der beiden Antriebsaggregate 2, 3 bestimmt sind.

Durch Schließen des Schaltelements 13 wird das Hohlrad 12c der Hilfs-Getriebestufe 12 an das Gehäuse 9 gekoppelt, um einen Freiheitsgrad des Differentialgetriebes 1 einzuschränken und zum Hochfahren des ersten Antriebsaggregats 2 das zweite Antriebsaggregat 3 zu nutzen, wobei hierzu dann Last über die Hilfs-Getriebestufe 12, ausgehend von dem zweiten Antriebsaggregat 3 in Richtung auf das erste Antriebsaggregat 2 übertragen wird.

Den Ausführungsbeispielen der Fig. 1 bis 3 ist gemeinsam, dass ein Element der Hilfs-Getriebestufe 12 entweder permanent (siehe Fig. 1, 3) oder schaltbar (siehe Fig. 2) an das zweite Antriebsaggregat 3 gekoppelt ist.

Im Unterschied hierzu ist es auch möglich, dass die Hilfs-Getriebestufe 12 mit der Welle 11 zusammenwirkt, an welcher die Arbeitsmaschine 4 angreift, und zwar entweder derart, dass ein Element der Hilfs-Getriebestufe 12 entweder permanent drehfest oder schaltbar an die Welle 11 gekoppelt ist. Dabei kann das zweite Antriebsaggregat 3 zusammen mit der Hilfs-Getriebestufe auf die andere Seite Differentialgetriebes 1 verlagert sein, an welcher die Welle 11 verläuft. Das zweite Antriebsaggregat 3 und die Hilfs-Getriebestufe 12 könne auch auf unterschiedlichen Seiten des Differentialgetriebes 1 angeordnet sein.

Die Erfindung erlaubt es, die Antriebsanordnung über das zweite Antriebsaggregat 3 hochzufahren, und zwar bis das erste Antriebsaggregat 2 seine Nenndrehzahl erreicht hat. So benötigt lediglich das zweite Antriebsaggregat 3 einen Umrichter. Eine Anfahrhilfe am ersten Antriebsaggregat 2 entfällt. Dann, wenn das Schaltelement 13 selbsttätig schließt, kann auf eine sicherheitsrelevante Steuerungseinrichtung zum Ansteuern des Schaltelements 13 verzichtet werden.

Dies wird durch Nutzen vorzugsweise einer Synchronkupplung oder eines Freilaufs erreicht, die oder der zum Hochfahren der Antriebsanordnung selbsttätig schließt und selbsttätig öffnet.

Die Erfindung betrifft weiterhin ein Verfahren zum Betreiben der erfindungsgemäßen Antriebsanordnung. Zum Starten derselben wird das Schaltelement 13 geschlossen, vorzugsweise selbsttätig, wobei dann das noch stromlose, erste Antriebsaggregat 2 über das zweite Antriebsaggregat 3 bei geschlossenem Schaltelement 13 bis zu seiner Nenndrehzahl hochgefahren wird und hierbei die Hilfs-Getriebestufe 12 Drehzahl in Richtung auf das erste Antriebsaggregat 2 überträgt. Mit Erreichen der Nenndrehzahl am ersten Antriebsaggregat 2 wird zunächst das erste Antriebsaggregat 2 bestromt und anschließend das Schaltelement 13 geöffnet. Die Drehzahl des zweiten Antriebsaggregats 3 wird reduziert und das Schaltelement 13 wird geöffnet, vorzugsweise selbsttätig.

Bei der Auslegung des zweiten Antriebsaggregats 3 sollte darauf geachtet werden, dass die Arbeitsmaschine 4 ein anwendungsspezifisches Hochlaufmoment entwickelt, das sich zu seiner Drehzahl in einer bekannten Funktion verhält. Dieses Drehmoment bzw. die erforderliche Leistung muss vom zweiten Antriebsaggregat 3 zwar nur kurzzeitig bis zum Bestromen des ersten Antriebsaggregates 2 aber zuverlässig bereitgestellt werden.

### Bezugszeichenliste

- 1: Differentialgetriebe
- 2: erstes Antriebsaggregat
- 3: zweites Antriebsaggregat
- 4: Arbeitsmaschine
- 5: erster Planetenradsatz
- 5a: Sonnenrad
- 5b: Planetenrad
- 6: zweiter Planetenradsatz
- 6a: Sonnenrad
- 6b: Planetenrad
- 7: Planetenwelle
- 8: Planetenträger
- 9: Gehäuse
- 10: Welle
- 11: Welle
- 12: Hilfs-Getriebestufe
- 12a: Sonnenrad
- 12b: Planetenrad
- 12c: Hohlrad
- 13: Schaltelement
- 14: Planetenträger

## Patentansprüche

1. Antriebsanordnung einer mit einer variabel einstellbaren Drehzahl anzutreibenden Arbeitsmaschine (4),
mit einem Differentialgetriebe (1),
mit einem an ein erstes Element des Differentialgetriebes (1) gekoppelten ersten Antriebsaggregat (2),
mit einer an ein zweites Element des Differentialgetriebes (1) gekoppelten Arbeitsmaschine (4),
mit einem an ein drittes Element des Differentialgetriebes (1) gekoppelten zweiten Antriebsaggregat (3), dessen Drehzahl einer von der Drehzahl des ersten Antriebsaggregats (2) abhängigen Drehzahl überlagerbar ist,
wobei das erste Antriebsaggregat (2) oder das zweite Antriebsaggregat (2) mit variabel einstellbarer Drehzahl antreibbar sind,
mit einer Hilfs-Getriebestufe (12) und ein mit der Hilfs-Getriebestufe (12) zusammenwirkendes Schaltelement (13),
wobei bei geschlossenem Schaltelement (13) die Hilfs-Getriebestufe (12) lastübertragend ist und die Drehzahlen von erstem Antriebsaggregat (2) und zweitem Antriebsaggregat (3) abhängig von zumindest einer Übersetzung der Hilfs-Getriebestufe (12) gekoppelt sind, und
wobei bei geöffnetem Schaltelement (13) die Hilfs-Getriebestufe (12) lastfrei ist und die Drehzahlen von erstem Antriebsaggregat (2) und zweitem Antriebsaggregat (3) entkoppelt sind;
**gekennzeichnet durch**
das zweite Antriebsaggregat (3) permanent drehfest mit einem Element der Hilfs-Getriebestufe (12) gekoppelt ist, und
ein anderes Element der Hilfs-Getriebestufe (12) zusammen mit dem ersten Antriebsaggregat (2) permanent drehfest an das erste Element des Differentialgetriebes (1) gekoppelt ist,
oder
ein anderes Element der Hilfs-Getriebestufe (12) zusammen mit der Arbeitsmaschine (4) permanent drehfest an das zweite Element des Differentialgetriebes (1) gekoppelt ist,
und das Schaltelement (13) in geschlossenem Zustand ein anderes Element der Hilfs-Getriebestufe (12) an ein Gehäuse koppelt.

2. Antriebsanordnung nach Anspruch 1, **dadurch gekennzeichnet, dass** die Hilfs-Getriebestufe (12) als Hilfs-Planetenradsatz ausgebildet ist.

3. Antriebsanordnung nach Anspruch 1 oder 2, **dadurch gekennzeichnet, dass** das Schaltelement (13) ein Freilauf oder eine Synchronkupplung ist.

4. Antriebsanordnung nach einem der Ansprüche 1 bis 3, **dadurch gekennzeichnet, dass** das Schaltelement (13) selbststätig schaltet, also selbststätig schließt und selbststätig öffnet.

5. Antriebsanordnung nach Anspruch 1 oder 2, **dadurch gekennzeichnet, dass** das Schaltelement (13) eine reibschlüssige Kupplung ist.

6. Antriebsanordnung nach einem der Ansprüche 1 bis 5, **dadurch gekennzeichnet, dass** das Schaltelement (13) in geschlossenem Zustand entweder das zweite Antriebsaggregat (3) drehfest mit einem Element der Hilfs-Getriebestufe (12) oder ein anderes Element des Hilfs-Getriebestufe (12) drehfest an das erste Element oder das zweite Element des Differentialgetriebes (1) koppelt.

7. Antriebsanordnung nach einem der Ansprüche 1 bis 6, **dadurch gekennzeichnet, dass**
das Differentialgetriebe (1) einen ersten Planetenradsatz (5) aufweist, an den das erste Antriebsaggregat (2) gekoppelt ist,
das Differentialgetriebe (1) einen zweiten Planetenradsatz (6) aufweist, an den die Arbeitsmaschine (4) gekoppelt ist,
der erste Planetenradsatz (5) und der zweite Planetenradsatz (6) jeweils Planetenräder (5b, 6b) aufweisen, die auf mindestens zwei gemeinsamen Planetenwellen (7), die in einem Planetenträger (8) gelagert sind, angeordnet sind;
der Planetenträger (8) in einem Gehäuse (9) drehbar gelagert und von dem zweiten Antriebsaggregat (3) antreibbar ist.

8. Antriebsanordnung nach Anspruch 7, **dadurch gekennzeichnet, dass**
der erste Planetenradsatz (5) ein Sonnenrad (5a) aufweist, an welches das erste Antriebsaggregat (2) gekoppelt ist, wobei das Sonnenrad (5a) des ersten Planetenradsatzes (5) in die auf den Planetenwellen (7) angeordneten Planetenräder (5b) des ersten Planetenradsatzes (5) kämmt, oder
der erste Planetenradsatz (5) ein Hohlrad aufweist, an welches das erste Antriebsaggregat (3) gekoppelt ist, wobei das Hohlrad des ersten Planetenradsatzes (5) in die auf den Planetenwellen (7) angeordneten Planetenräder (5b) des ersten Planetenradsatzes (5) kämmt.

9. Antriebsanordnung nach Anspruch 7 oder 8, **dadurch gekennzeichnet, dass**
der zweite Planetenradsatz (6) ein Sonnenrad (6a) aufweist, an welches die Arbeitsmaschine (4) gekoppelt ist, wobei das Sonnenrad (6a) des zweiten Planetenradsatzes (6) in die auf den Planetenwellen (7) angeordneten Planetenräder (6b) des zweiten Planetenradsatzes (6) kämmt.

10. Antriebsanordnung nach einem der Ansprüche 1 bis 9, **dadurch gekennzeichnet, dass** das erste Antriebsaggregat (2) mit konstanter Drehzahl und das zweite Antriebsaggregat (3) mit variabler Drehzahl antreibbar ist.

11. Verfahren zum Betreiben einer Antriebsanordnung nach einem der Ansprüche 1 bis 10, mit folgenden Schritten:
zum Starten der Antriebsanordnung wird das Schaltelement (13) geschlossen und das noch stromlose, erste Antriebsaggregat (2) wird über das zweite Antriebsaggregat (3) bis zu seiner Nenndrehzahl hochgefahren,
mit Erreichen der Nenndrehzahl am ersten Antriebsaggregat (2) wird das erste Antriebsaggregat (2) bestromt und das Schaltelement (13) geöffnet.

## Claims

1. A drive arrangement of a working machine (4) which is to be driven at a variably adjustable rotational speed,
wherein the drive arrangement comprises a differential gear (1),
wherein the drive arrangement comprises a first drive unit (2) which is coupled to a first element of the differential gear (1),
wherein the drive arrangement comprises a working machine (4) which is coupled to a second element of the differential gear (1),
wherein the drive arrangement comprises a second drive unit (3) which is coupled to a third element of the differential gear (1), wherein the rotational speed of the second drive unit (3) can be superimposed on a rotational speed which is dependent on the rotational speed of the first drive unit (2),
wherein the first drive unit (2) or the second drive unit (2) can be driven at a variably adjustable rotational speed,
wherein the drive arrangement comprises an auxiliary gear stage (12) and a switching element (13) which cooperates with the auxiliary gear stage (12),
wherein, when the switching element (13) is closed, the auxiliary gear stage (12) is load-transmitting and the rotational speeds of the first drive unit (2) and the second drive unit (3) are coupled as a function of at least one transmission ratio of the auxiliary gear stage (12), and
wherein, when the switching element (13) is open, the auxiliary gear stage (12) is load-free and the rotational speeds of the first drive unit (2) and the second drive unit (3) are decoupled;
**characterised in that**
the second drive unit (3) is permanently coupled to an element of the auxiliary gear stage (12) in a rotationally fixed manner, and
another element of the auxiliary gear stage (12), together with the first drive unit (2), is permanently coupled to the first element of the differential gear (1) in a rotationally fixed manner,
**or**
another element of the auxiliary gear stage (12), together with the working machine (4), is permanently coupled to the second element of the differential gear (1) in a rotationally fixed manner,
and the switching element (13), when the switching element (13) is in the closed state, couples another element of the auxiliary gear stage (12) to a housing.

2. The drive arrangement according to claim 1, **characterised in that** the auxiliary gear stage (12) is designed as an auxiliary planetary gear set .

3. The drive arrangement according to claim 1 or 2, **characterised in that** the switching element (13) is a freewheel or a synchronous clutch.

4. The drive arrangement according to any one of claims 1 to 3, **characterised in that** the switching element (13) switches automatically, that is, it closes and opens automatically.

5. The drive arrangement according to claim 1 or 2, **characterised in that** the switching element (13) is a frictionally engaging clutch.

6. The drive arrangement according to any one of claims 1 to 5, **characterised in that,** in the closed state, the switching element (13) either couples the second drive unit (3) to an element of the auxiliary gear stage (12) in a rotationally fixed manner, or couples another element of the auxiliary gear stage (12) to the first element or to the second element of the differential gear (1) in a rotationally fixed manner.

7. The drive arrangement according to any one of claims 1 to 6, **characterised in that**
the differential gear (1) comprises a first planetary gear set (5) to which the first drive unit (2) is coupled,
the differential gear (1) comprises a second planetary gear set (6) to which the working machine (4) is coupled,
the first planetary gear set (5) and the second planetary gear set (6) each comprise planet gears (5b, 6b) which are arranged on at least two common planetary shafts (7) which are supported in a planet carrier (8);
the planet carrier (8) is rotatably supported in a housing (9) and can be driven by the second drive unit (3).

8. The drive arrangement according to claim 7, **characterised in that**
the first planetary gear set (5) comprises a sun gear (5a) to which the first drive unit (2) is coupled, wherein the sun gear (5a) of the first planetary gear set (5) meshes with the planet gears (5b) of the first planetary gear set (5), which planet gears (5b) of the first planetary gear set (5) are arranged on the planetary shafts (7), or
the first planetary gear set (5) comprises a ring gear to which the first drive unit (3) is coupled, wherein the ring gear of the first planetary gear set (5) meshes with the planet gears (5b) of the first planetary gear set (5), which planet gears (5b) of the first planetary gear set (5) are arranged on the planetary shafts (7).

9. The drive arrangement according to claim 7 or 8, **characterised in that**
the second planetary gear set (6) comprises a sun gear (6a) to which the working machine (4) is coupled, wherein the sun gear (6a) of the second planetary gear set (6) meshes with the planet gears (6b) of the second planetary gear set (6) arranged on the planetary shafts (7).

10. The drive arrangement according to any one of claims 1 to 9, **characterised in that** the first drive unit (2) can be driven at a constant rotational speed and the second drive unit (3) can be driven at a variable rotational speed.

11. A method of operating a drive arrangement according to any one of claims 1 to 10, comprising the following steps:
to start the drive arrangement, the switching element (13) is closed and the first drive unit (2), which is still de-energised, is run up to its rated rotational speed via the second drive unit (3),
when the rated rotational speed is reached on the first drive unit (2), the first drive unit (2) is energised and the switching element (13) is opened.

## Revendications

1. Ensemble d'entraînement d'une machine de travail (4) destinée à être entraînée avec une vitesse réglable de manière variable,
avec un différentiel (1),
avec un premier organe d'entraînement (2) couplé à un premier élément du différentiel (1),
avec une machine de travail (4) couplée à un deuxième élément du différentiel (1),
avec un deuxième organe d'entraînement (3) couplé à un troisième élément du différentiel (1), dont la vitesse est superposable à une vitesse dépendante de la vitesse du premier organe d'entraînement (2),
dans lequel le premier organe d'entraînement (2) ou le deuxième organe d'entraînement (2) peut être entraîné à une vitesse réglable de manière variable,
avec un étage de transmission auxiliaire (12) et un élément de commutation (13) coopérant avec l'étage de transmission auxiliaire (12),
dans lequel, lorsque l'élément de commutation (13) est fermé, l'étage de transmission auxiliaire (12) transmet la charge et les vitesses du premier organe d'entraînement (2) et deuxième organe d'entraînement (3) sont couplées en fonction d'au moins une démultiplication de l'étage de transmission auxiliaire (12), et
dans lequel, lorsque l'élément de commutation (13) est ouvert, l'étage de transmission auxiliaire (12) est sans charge et les vitesses du premier organe d'entraînement (2) et deuxième organe d'entraînement (3) sont découplées ; **caractérisé par le fait que**
le deuxième organe d'entraînement (3) est couplé en permanence de manière solidaire en rotation à un élément de l'étage de transmission auxiliaire (12), et
un autre élément de l'étage de transmission auxiliaire (12) est couplé en permanence de manière solidaire en rotation au premier élément du différentiel (1) conjointement avec le premier organe d'entraînement (2),
**ou**
un autre élément de l'étage de transmission auxiliaire (12) est couplé en permanence de manière solidaire en rotation au deuxième élément du différentiel (1) conjointement avec la machine de travail (4),
et l'élément de commutation (13) à l'état fermé couple un autre élément de l'étage de transmission auxiliaire (12) à un carter.

2. Ensemble d'entraînement selon la revendication 1, **caractérisé en ce que** l'étage de transmission auxiliaire (12) est réalisé comme un train planétaire auxiliaire.

3. Ensemble d'entraînement selon la revendication 1 ou 2, **caractérisé en ce que** l'élément de commutation (13) est une roue libre ou un accouplement synchrone.

4. Ensemble d'entraînement selon l'une quelconque des revendications 1 à 3, **caractérisé en ce que** l'élément de commutation (13) se commute automatiquement, donc se ferme et s'ouvre automatiquement.

5. Ensemble d'entraînement selon la revendication 1 ou 2, **caractérisé en ce que** l'élément de commutation (13) est un accouplement par friction.

6. Ensemble d'entraînement selon l'une quelconque des revendications 1 à 5, **caractérisé en ce que** l'élément de commutation (13), à l'état fermé, couple soit le deuxième organe d'entraînement (3) de manière solide en rotation avec un élément de l'étage de transmission auxiliaire (12), soit un autre élément de l'étage de transmission auxiliaire (12) de manière solidaire en rotation au premier élément ou au deuxième élément du différentiel (1).

7. Ensemble d'entraînement selon l'une quelconque des revendications 1 à 6, **caractérisé en ce que**
le différentiel (1) présente un premier train planétaire (5) auquel le premier organe d'entraînement (2) est couplé, le différentiel (1) présente un deuxième train planétaire (6) auquel la machine de travail (4) est couplée,
le premier train planétaire (5) et le deuxième train planétaire (6) présentent respectivement des satellites (5b, 6b), qui sont disposés sur au moins deux arbres planétaires (7) communs qui sont montés dans un porte-satellite (8) ;
le porte-satellite (8) est monté rotatif dans un carter (9) et peut être entraîné par le deuxième organe d'entraînement (3).

8. Ensemble d'entraînement selon la revendication 7, **caractérisé en ce que**
le premier train planétaire (5) présente un solaire (5a) auquel le premier organe d'entraînement (2) est couplé, dans lequel le solaire (5a) du premier train planétaire (5) s'engrène dans les satellites (5b) du premier train planétaire (5) disposés sur les arbres planétaires (7), ou le premier train planétaire (5) présente une couronne à laquelle le premier organe d'entraînement (3) est couplé, dans lequel la couronne du premier train planétaire (5) s'engrène dans les satellites (5b) du premier train planétaire (5) disposés sur les arbres planétaires (7).

9. Ensemble d'entraînement selon la revendication 7 ou 8, **caractérisé en ce que**
le deuxième train planétaire (6) présente un solaire (6a) auquel la machine de travail (4) est couplée, dans lequel le solaire (6a) du deuxième train planétaire (6) s'engrène dans les satellites (6b) du deuxième train planétaire (6) disposés sur les arbres planétaires (7).

10. Ensemble d'entraînement selon l'une quelconque des revendications 1 à 9, **caractérisé en ce que** le premier organe d'entraînement (2) peut être entraîné à vitesse constante et le deuxième organe d'entraînement (3) à vitesse variable.

11. Procédé de fonctionnement d'un ensemble d'entraînement selon l'une quelconque des revendications 1 à 10, avec les étapes suivantes :
pour démarrer l'ensemble d'entraînement, l'élément de commutation (13) est fermé et le premier organe d'entraînement (2) encore sans courant est remonté par le deuxième organe d'entraînement (3) jusqu'à sa vitesse nominale,
lorsque le régime nominal est atteint sur le premier organe d'entraînement (2), le premier organe d'entraînement (2) est alimenté en courant et l'élément de commutation (13) est ouvert.
